# DEMANDE DE BREVET EUROPEEN

(11) **EP 1 862 841 A1**
(43) Date de publication de la demande: **05.12.2007**
(21) Numéro de dépôt: 06290909.8
(22) Date de dépôt: 01.06.2006
(51) Int. Cl.: G02B 27/01, G02B 5/32

(54) **Dispositif de projection holographique tête haute pour véhicule automobile**

(71) Demandeur: Delphi Technologies, Inc., Troy, Michigan 48007 (US)
(72) Inventeur: Tupinier Laurent, 67116 REICHSTETT (FR); Ballu Arnaud, 67411 ILLKIRCH (FR)
(74) Mandataire: Littolff, Denis

(57) **Abrégé**

Dispositif de projection holographique tête haute pour véhicules automobiles, comportant un module de projection (9, 10, 11, 12, 13, 14, 15) qui projette vers un miroir holographique des images concernant des données de fonctionnement du véhicule ou de conduite, ledit miroir holographique (4) consistant en un réseau de diffraction optique disposé dans l'axe de vision du conducteur.

## Description

La présente invention a trait à un dispositif de projection holographique tête haute pour véhicule automobile, c'est-à-dire un système optique permettant au conducteur de visualiser des données relatives à la conduite de son véhicule ou à son fonctionnement via un miroir holographique placé dans son champ de vision.

Le dispositif de l'invention comporte dès lors un module projection et un ensemble d'éléments diffractifs agissant comme un miroir permettant de projeter des données à un endroit prédéfini.

Les systèmes existants placent l'optique de fusion sous la planche de bord et utilisent un film semi réflectif incorporé au pare-brise pour venir projeter l'image à l'avant du véhicule. Cette optique de fusion est en général complexe, car elle doit s'adapter à la géométrie particulière du pare-brise, c'est-à-dire en particulier être conformée pour une adaptation à la courbure de ce dernier. Le système, une fois installé, n'est en tout cas pas facilement modifiable en ce qu'il est partie intégrante du véhicule, et il demande une mise au point très spécifique qui ne peut être réalisée qu'en usine de montage et non chez le concessionnaire, ce qui rend sa maintenance difficile.

Dans les configurations existantes, le module de projection est en général situé sous le tableau de bord de façon à pouvoir projeter l'image devant et en bas du pare-brise. Les systèmes connus permettent le positionnement de l'information environ 3 mètres devant le conducteur du véhicule, qui a par conséquent l'impression de voir les données s'afficher à l'extérieur du véhicule, dans un espace surmontant le capot ou la route.

L'invention s'écarte des partis pris traditionnels en matière de système de vision tête haute, et propose un système beaucoup moins onéreux que les dispositifs existants et amplement plus simple à mettre en oeuvre, autant pour ce qui concerne l'installation que d'éventuelles réparations, en première ou en deuxième monte.

A cet effet, le dispositif de projection holographique de tête haute spécifique à l'invention, se caractérise à titre principal en ce que le module de projection projette vers un miroir holographique des images concernant des données de fonctionnement du véhicule ou de conduite, ledit miroir holographique consistant en au moins un réseau de diffraction optique disposé dans l'axe de vision du conducteur.

Il convient par conséquent en toute hypothèse que le miroir holographique soit placé dans la portée du regard, et positionné dans la direction du regard du conducteur lorsqu'il regarde, dans sa position naturelle de conduite, à travers le pare-brise.

En fait, et de préférence, ce miroir holographique est réalisé par embossage ou injection sur du plastique transparent. Il peut aussi le cas échéant être réalisé en gélatine dichromatique déposée en couche sur un substrat transparent. Dans ce cas, la couche de gélatine peut présenter une épaisseur par exemple comprise entre 5µm et 15µm.

Ces technologies permettent la projection virtuelle holographique de données instantanées, et elles sont donc adaptées à la visualisation de données de conduite ou de fonctionnement du véhicule, par nature impermanentes.

L'un des avantages prépondérants de l'invention réside dans le fait que le miroir holographique peut être disposé sur un support plan, ce qui rend son montage considérablement plus facile et aboutit à simplifier l'ensemble du dispositif mis en oeuvre.

Selon une possibilité intéressante notamment en termes de praticité, le miroir holographique peut en particulier être localisé sur un écran pare-soleil transparent.

Cet agencement présente de multiples avantages. En premier lieu, un tel pare-soleil est une surface transparente plane, et il est par conséquent beaucoup plus facile de gérer la mise en place du miroir. Ensuite, cela signifie qu'un tel système peut être installé sans obstacle particulier en deuxième monte, c'est-à-dire sur une voiture qui n'en était pas équipée initialement. Enfin, les opérations de maintenance ou de remplacement sont facilitées par le fait que le pare-soleil peut lui-même être très facilement démonté.

De préférence, le pare-soleil peut intégrer un film électrochrome dont la teinte s'assombrit lorsque la luminosité ambiante augmente.

Cette caractéristique vient à l'appui du confort d'utilisation offert par l'invention, puisque quelles que soient les conditions de luminosité extérieures, par exemple dues au soleil, les données affichées via le miroir holographique restent parfaitement visibles pour le conducteur.

Selon une géométrie possible, le miroir holographique est rectangulaire avec des dimensions de l'ordre de 55 à 65 mm par 55 à 65 mm qui apparaissent adaptées à l'utilisation associée à un pare-soleil, dans un habitacle de véhicule.

Le module de projection utilisé par l'invention comporte selon une possibilité une diode laser ou une LED de forte puissance émettant un faisceau dirigé vers un objectif d'expansion du faisceau, puis vers un composant polariseur, un écran LCD relié à un ordinateur traitant les données à projeter et formant une image source, une lentille de focalisation, un diaphragme de filtrage et une lentille opalisée de diffusion.

Le miroir holographique réfléchit en pratique la lumière provenant de l'image finale formée sur la lentille de diffusion. Le conducteur a l'impression que l'image se forme derrière le miroir holographique, dans son champ de vision.

On peut bien entendu imaginer plusieurs couleurs, mais le "miroir holographique" ne peut pas absorber la combinaison de trois couleurs, et il n'est par conséquent envisageable de gérer que des informations monocouleur par zone dudit miroir.

De préférence, les lentilles et le diaphragme de filtrage sont réalisés en optique diffractive plane.

Une telle possibilité simplifie bien entendu considérablement la conception du module de projection. Cela est d'autant plus intéressant que, par exemple dans l'optique de son association à un miroir holographique localisé sur un pare-soleil, le module de projection est, dans l'invention, disposé au voisinage du plafonnier du véhicule et que sa miniaturisation est alors évidemment considérée comme un avantage prépondérant.

L'invention va à présent être décrite plus en détail, en référence aux figures, pour lesquelles :
- la figure 1 représente une vue en perspective d'un tableau de bord surmonté du pare-brise et d'une portion du plafond d'un véhicule équipé d'un système selon l'invention ;
- la figure 2 montre schématiquement l'aspect et les dimensionnements relatifs d'un pare-soleil équipé d'un miroir holographique permettant la mise en oeuvre de l'invention ; et
- la figure 3 représente un schéma optique simplifié d'un projecteur utilisable dans le cadre de l'invention.

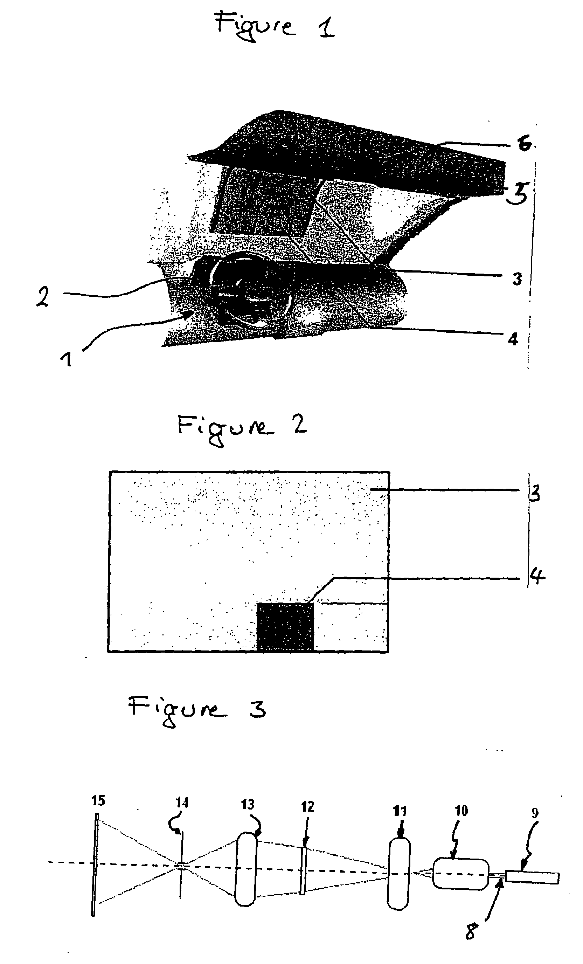

En référence à la figure 1, le tableau de bord (1) du véhicule comportant le volant (2) est situé sous un pare-soleil (3) comprenant en partie basse un miroir holographique (4). Un projecteur (5) est disposé au voisinage du plafonnier (non représenté). Le pare-soleil (3) ou le support du miroir holographique comporte des moyens de guidage (6) permettant le cas échéant de le déployer / rétracter. Le miroir holographique (4) permet la projection de différentes informations du type vitesse, niveau d'huile, existence d'un véhicule en angle mort, etc au gré du constructeur du véhicule.

Le pare-soleil (3), également visible en figure 2, est par exemple réalisé en plastique équipé d'un film électrochrome, de telle sorte que la réalisation de l'élément holographique (4) est beaucoup plus simple que dans les configurations de l'art antérieur. Le système est monoculaire, et le miroir holographique doit par conséquent être placé devant les yeux du conducteur, dans son axe de vision. Comme on l'a déjà indiqué, l'hologramme fonctionnant à la manière d'un miroir, il doit par conséquent être non seulement dans le champ de vision du conducteur, mais ce dernier doit de plus le regarder pour avoir un accès visuel aux données projetées. Cela doit donc être possible lorsque le conducteur est dans sa position de conduite naturelle.

Selon une possibilité, la couche holographique, de l'ordre de 10 microns, est réalisée sur un substrat en plastique ou équivalent d'épaisseur par exemple voisine de 3 mm.

Toujours sur un plan dimensionnel, le miroir holographique (4), selon une configuration adaptée au volume de l'habitacle et à la position du conducteur, peut être un carré de l'ordre de 60 mm de côté intégré par exemple dans un pare-soleil (3) dont les dimensions sont approximativement de 300 mm x 200 mm. Tout autre support peut néanmoins être utilisé à condition que son emplacement puisse assurer le fonctionnement en miroir holographique de l'invention.

La localisation précise du miroir holographique (4) n'est pas nécessairement celle qui apparaît en figures 1 et 2. L'emplacement dépend en fait des dimensions relatives du pare-soleil (3) et du miroir (4) d'une part, de l'agencement interne du véhicule, des possibilités de réglage de la position du pare-soleil (3) et du siège du conducteur, etc.

Le module de projection apparaît schématiquement en figure 3. Il se compose d'un certain nombre de composants optiques qui visent à envoyer une image source vers le miroir holographique, lequel a pour fonction de réfléchir la lumière issue de cette image, telle qu'elle est formée en sortie du module de projection. Plus précisément, une diode laser (9) émet un faisceau laser (8) à destination d'un objectif (10), lequel réalise une expansion du faisceau (8). Cette diode (9) peut être remplacée par une LED à forte puissance.

Une lentille polarisante (11) polarise ensuite la lumière qu'elle émet à destination d'un écran LCD (12). Cet écran est connecté à l'ordinateur de bord de la voiture, qui lui envoie les données destinées à être projetées sur le miroir holographique (4).

L'image source apparaissant sur l'écran LCD (12) est ensuite focalisée, à l'aide d'une lentille (13), en direction d'un diaphragme (14) à orifice centré sur l'axe optique. L'image est par conséquent filtrée par ce diaphragme (14), avant d'être projetée sur une lentille diffusive (15) opalisée.

L'utilisation d'un système basé sur un module de projection localisé au niveau du plafonnier, avec un miroir holographique situé sur un pare-soleil, s'avère particulièrement avantageuse puisque cela permet en fait d'envisager l'adjonction de tels systèmes sur des voitures qui n'en étaient pas équipées à la construction.

Le fonctionnement en miroir de l'hologramme, imposant au conducteur de regarder dans sa direction et d'avoir par conséquent le regard rivé sur l'environnement du véhicule, est avantageux en ce qu'il accroît la sécurité de la conduite.

La présente invention ne se limite bien entendu pas à l'exemple illustré dans les figures précédentes, qui n'en sont par suite pas limitatives. Les détails de forme, de configuration ou de choix des matériaux etc. peuvent être modifiés sans pour autant sortir du cadre de la présente invention.

## Revendications

1. Dispositif de projection holographique tête haute pour véhicules automobiles, comportant un module de projection (9, 10, 11, 12, 13, 14, 15) et **caractérisé en ce que** ledit module de projection projette vers un miroir holographique des images concernant des données de fonctionnement du véhicule ou de conduite, ledit miroir holographique (4) consistant en un réseau de diffraction optique disposé dans l'axe de vision du conducteur.

2. Dispositif de projection holographique tête haute selon la revendication précédente, **caractérisé en ce que** le miroir holographique (4) est réalisé par embossage ou injection sur du plastique transparent.

3. Dispositif de projection holographique tête haute selon la revendication 1, **caractérisé en ce que** le miroir holographique (4) est réalisé en gélatine dichromatique déposée en couche sur un substrat transparent.

4. Dispositif de projection holographique tête haute selon la revendication précédente, **caractérisé en ce que** la couche de gélatine a une épaisseur comprise entre 5 *µ*m et 15 µm.

5. Dispositif de projection holographique tête haute selon l'une quelconque des revendications précédentes, **caractérisé en ce que** le miroir holographique (4) est placé sur un support plan.

6. Dispositif de projection holographique tête haute selon la revendication précédente, **caractérisé en ce que** le miroir holographique (4) est placé sur un écran pare-soleil (3) transparent.

7. Dispositif de projection holographique tête haute selon la revendication précédente, **caractérisé en ce que** le pare-soleil (3) comprend un film électrochrome dont la teinte s'assombrit lorsque la luminosité ambiante augmente.

8. Dispositif de projection holographique tête haute selon l'une des revendications 6 et 7, **caractérisé en ce que** le miroir holographique (4) est rectangulaire avec des dimensions de l'ordre de 55 à 65 mm par 55 à 65 mm.

9. Dispositif de projection holographique tête haute selon l'une quelconque des revendications précédentes, **caractérisé en ce que** le module de projection comporte une diode laser (9) ou une LED de forte puissance, émettant un faisceau (8) dirigé vers un objectif d'expansion (10) du faisceau (8), puis vers un composant polariseur (11), un écran LCD (12) relié à un ordinateur traitant les données à projeter, et formant une image source, une lentille de focalisation (13), un diaphragme de filtrage (14) et une lentille opalisée de diffusion (15).

10. Dispositif de projection holographique tête haute selon la revendication précédente, **caractérisé en ce que** les lentilles (13, 15) et le diaphragme de filtrage (14) sont réalisés en optique diffractive plane.

11. Dispositif de projection holographique tête haute, selon l'une des revendications 6 à 10, **caractérisé en ce que** le module de projection est disposé au voisinage du plafonnier du véhicule.
